# EUROPÄISCHE PATENTSCHRIFT

(11) **EP 0 592 059 B1**
(45) Veröffentlichungstag und Bekanntmachung des Hinweises auf die Patenterteilung: **10.12.1997**
(21) Anmeldenummer: 93250248.7
(22) Anmeldetag: 13.09.1993
(51) Int. Cl.: F01K 23/06

(54) **Verfahren und Vorrichtung zum Verdichten von Luft**
Process and system for compressing air
Procédé et dispositif pour comprimer de l'air

(30) Priorität: 07.10.1992 DE 4234393
(43) Veröffentlichungstag der Anmeldung: 13.04.1994
(73) Patentinhaber: CompAir Drucklufttechnik GmbH, 55469 Simmern (DE)
(72) Erfinder: Wenzel, Harald, E-63699 Kefenrod (DE)
(74) Vertreter: Kodron, Rudolf S., Dipl.-Ing.

(56) Entgegenhaltungen:
- EP-A- 0 162 368
- DE-A- 2 102 770
- GB-A- 2 063 370
- US-A- 3 705 491
- US-A- 4 901 531

## Beschreibung

Die Erfindung betrifft ein Verfahren und eine Vorrichtung zum Verdichten von Luft.

Verdichtete Luft wird für den Betrieb ortsveränderlicher Druckgasverbraucher und Arbeitsmittel, wie beispielsweise im Bauwesen, benötigt. Im Zuge zunehmend verantwortungsvollerem Umgang mit natürlichen Ressourcen ist es insbesondere für den kommerziellen Anwender von Großverbrauchern an Energie zweckmäßig, durch verbesserte Wirkungsgrade des angewandten Verfahrens sowie der eingesetzten Maschinen und Anlagen anteilmäßig Energie zu sparen. Auch auf dem Gebiet der Verdichtertechnik sind vielfältige Versuche unternommen worden, entstehende Prozeßabwärme inner- und außerprozessual zu verwenden, um die Energiebilanz zu verbessern und damit den Gesamtwirkungsgrad zu erhöhen.

Aus der DE-OS 29 12 190 ist eine Anordnung zur Erzeugung von Druckluft bekannt, bei dem die Abgasseite einer Mehrzylinder-Hubkolben-Brennkraftmaschine an die Antriebsseite eines Abgasturboladers angeschlossen ist. Die vom Frischluftverdichter des Abgasturboladers angesaugte und verdichtete Luft wird über einen Zwischenkühler der Saugseite der Brennkraftmaschine zugeführt. Nach dem Zwischenkühler zweigt von der zur Brennkraftmaschine führenden Ladeleitung eine Leitung ab, die mit der Saugseite eines Luftpressers z.B. einem Kolbenverdichter verbunden ist. Die Druckleitung des Luftpressers ist mit den bei Kraftfahrzeugen mittels Druckluft gespeister Hilfsaggregate wie Fahrzeug-Bremsen, Luftfederung, Türöffner usw. verbunden. Durch diese vorgeschlagene Anordnung wird erreicht, daß ein zusätzlicher Luftfilter für den Luftpresser eingespart und durch Senkung der Verdichtungsendtemperatur die thermische Belastung der Bauteile des Luftpressers geringer wird.

Weiterhin ist ein Verfahren zum Betrieb eines Verdichters mit einer Verbrennungsmaschine zur speziellen Erzeugung von hochtemperiertem Hochdruckgas bekannt (EP-A-0 248 640), bei der die Abwärme der Verbrennungsmaschine nutzbringend zur Temperaturerhöhung des komprimierten Gases verwendet wird. Trotz des auf diese Art verbesserten Gesamtwirkungsgrades ist diese Arbeitsweise jedoch nur auf den speziellen Anwendungsfall beschränkt und für üblicherweise gekühltes Druckgas unbrauchbar.

Weiterhin ist ein mehrstufiger Verdichter bekannt, zwischen dessen einzelnen Verdichterstufen Kühler vorgesehen sind, die integraler Bestandteil einer Wärmepumpe sind (DE-OS 31 34 844). Dabei wird die im Prozeß entstehende Verdichtungswärme in extern nutzbare Wärme überführt. Eine interne Verwendung der so bereitgestellten Wärme ist nicht vorgesehen. Damit wird zwar die Energiebilanz der Verdichteranordnung verbessert, jedoch sind externe Prozesse zur nutzbringen Verwendung der rückgewonnenen Energie notwendig. Für einen autonomen ortsveränderlichen Verdichter ist diese Form der Wirkungsgradverbesserung unzweckmäßig.

Ein weiteres Verfahren zum Verdichten von Luft sowie eine dazugehörige Vorrichtung ist in der EP-0162368 A2 offenbart. Zur Erzeugung von Injektionsgas, vorzugsweise zum Austreiben von Erdöl aus Lagerstätten wird eine thermische Energieerzeugungsanlage mit einer Luftzerlegungsanlage kombiniert. Die letztgenannte Anlage besteht aus einer Gasturbine, deren Nutzseite mit einem Verdichter verbunden ist. Das Abgas der Gasturbine wird einem Abhitzekessel zugeführt, wo es unter Zusatz von Brennstoff verbrannt bzw. nachverbrannt wird. Die dabei entstehende Wärme wird auf einen geschlossenen Flüssigkeits-Dampf-Kreislauf übertragen, wobei der überhitzte Dampf zwei im Parallelbetrieb arbeitenden Dampfturbinen zugeführt wird. Die Nutzseiten beider Dampfturbinen sind mit je einem Verdichter verbunden, wobei ein Turbosatz als Nachverdichtung für das Injektionsgas fungiert und der zweite Turbosatz die Luftzerlegungsanlage betreibt. Nachteilig bei diesem Verfahrenskonzept ist der große apparative Aufwand mit der dazugehörigen aufwendigen Steuer- und Regeleinrichtung, so daß die dazugehörige Vorrichtung nicht als mobile Anlage geeignet ist.

Ziel der Erfindung ist es, ausgehend von den bekannten Verfahren ein verbessertes Verfahren zum Verdichten eines gasförmigen Mediums, insbesondere Luft, anzugeben, um den Gesamtwirkungsgrad mobiler Verdichteranlagen zu erhöhen. Als Gesamtwirkungsgrad ist hierbei das Verhältnis der benötigten Antriebsenergie zur verdichteten Gasmenge zu sehen.

Die gestellte Aufgabe wird erfindungsgemäß durch die im Anspruch 1 angegebenen Merkmale gelöst. Vorteilhafte Weiterbildungen sowie eine Vorrichtung zur Durchführung des Verfahrens sind Bestandteil von weiteren Ansprüchen.

Das erfindungsgemäße Verfahren zeichnet sich dadurch aus, daß mit dem Abgasstrom einer einen Verdichter antreibende Wärmekraftmaschine eine Flüssigkeit eines geschlossenen oder offenen Flüssigkeit-Dampf-Kreislaufsystems verdampft und überhitzt und der überhitzte Dampf der Antriebsseite eines Turboladers in Form eines Dampfturboladers zugeführt wird. Bei der schon bekannten direkten Beaufschlagung der Antriebsseite eines Abgasturboladers mit dem Abgasstrom einer Wärmekraftmaschine wird weniger die im Abgas enthaltene thermische Energie sondern überwiegend die kinetische Energie zum Antrieb der Radialturbine genutzt. Diese Energie kann aber nur dann wirkungsvoll verwendet werden, wenn der Abgasgegendruck entsprechend hoch ist. Dies gilt insbesondere dann, wenn die Abgastemperatur und der Massenstrom des Abgases gering sind. Ein hoher Abgasgegendruck bedeutet aber für die Wärmekraftmaschine eine höhere Ausschiebearbeit und damit Leistungsverlust, was gleichbedeutend ist mit einer Minderung der Antriebsleistung für den Verdichter. Die maximale Leistung für die Wärmekraftmaschine wird dann erreicht, wenn die Wärmekraftmaschine gegen den geringstmöglichen Abgasgegendruck, d.h. gegen Atmosphärendruck ausschiebt. Demgegenüber bewirkt der im Flüssigkeit-Dampf-Kreislaufsystem angeordnete Abgaswärmetauscher bzw. Verdampfer nur einen sehr geringen, im allgemeinen vernachlässigbaren Abgasaufstau und übernimmt zudem noch Schalldämpferfunktion. Dies bedeutet, daß in vorteilhafter Weise durch das vorgeschlagene Verfahren das zu verdichtende gasförmige Medium durch den Dampfturbolader ohne wesentliche Rückwirkung auf die Wärmekraftmaschine vor- und/oder nachverdichtet und dadurch der Gesamtwirkungsgrad angehoben wird.

Die grundsätzliche Verfahrensweise kann je nach Anlagekonzeption und Auslegung variiert werden. Beispielsweise kann der Dampfstrom geteilt und je ein Teilstrom der Antriebsseite mehrerer vorzugsweise zweier Turbolader für die Vor- und Nachverdichtung zugeführt werden. Die Teilung des Dampfstromes kann man alternativ dazu oder zusätzlich für die Regelung verwenden, indem ein Teilstrom als Bypass zu- oder abgeschaltet wird. Auch eine Reihenschaltung ist möglich, bei der der Dampfstrom nacheinander der Antriebsseite mehrerer Turbolader zugeführt wird. Eine weitere Variante ergibt sich in der Weise, daß der Abgasstrom nach dem Verdampfen der Flüssigkeit für eine Zwischenerwärmung genutzt wird. Dazu wird der Dampfstrom nach Verlassen des ersten Dampfturboladers durch einen Wärmetauscher geleitet, der ebenfalls mit dem Abgasstrom beaufschlagt wird. Je nach Auslegung des Verdampfers bzw. des Wärmetauschers kann es auch zweckmäßig sein, den Abgasstrom zuerst dem Wärmetauscher für die Zwischenerwärmung und anschließend dem Verdampfer zuzuführen. Das schon bereits bekannte Verfahren der direkten Beaufschlagung der Antriebsseite eines Abgasturboladers mit dem Abgasstrom einer Wärmekraftmaschine kann man mit dem vorgeschlagenen Verfahren kombinieren. Dazu wird beispielsweise der Abgasturbolader als Vorverdichtungsaggregat und der Dampfturbolader als Nachverdichtungsaggregat verwendet. Unter Beachtung der zuvor gemachten Ausführungen kann es aber vorteilhaft sein, mit dem Abgasstrom zuerst auf das Flüssigkeits-Dampf-Kreislaufsystem einzuwirken und anschließend die Antriebsseite des Abgasturboladers zu beaufschlagen.

Bei dem angesprochenen Verdichter handelt es sich grundsätzlich um einen Verdichter jeder Bauart, der sich zum Verdichten eines Gases eignet. Dazu gehören vorzugsweise alle Verdichter mit veränderlichem Verdichtungsraum, wie z.B. Kolben- und Schraubenkompressoren, aber auch alle Verdichter, die nach einem anderen Verdichtungssystem, wie z.B. Turboverdichter arbeiten. Bei der angesprochenen Wärmekraftmaschine handelt es sich um Hubkolbenmaschinen, wie z.B. Diesel- und Benzinmotoren sowie um Drehkolbenmaschinen und Gasturbinen jeder Art. Das zu verdichtende Gas ist insbesondere Luft, jedoch auch jedes andere gasförmige Medium, das sich zur Verdichtung eignet. Als Dampfturbolader eignen sich insbesondere solche mit radialem Laufrad auf der Verdichterseite und tangentialem Laufrad auf der Turbinenseite, jedoch auch alle anderen geeigneten Laufradformen.

Ausgehend von einem für sich bekannten Verdichter, der das zu komprimierende Gas durch einen Filter und eine Ansaugleitung bezieht und durch eine Druckleitung in einen Druckbehälter speist, sowie durch eine Wärmekraftmaschine nutzseitig betrieben wird, ist mindestens ein Dampfturbolader vorgesehen. Dieser Dampfturbolader ist wahlweise zur Vor- und/oder Nachverdichtung dem Verdichter vor- und/oder nachgeordnet und wird mit dem Abgas der Wärmekraftmaschine insofern betrieben, als der Energieinhalt des Abgases dadurch genutzt wird, daß in einem Wärmetauscher ein Energieaustausch zwischen Abgas und Flüssigkeit, vorzugsweise Wasser bzw. Flüssigkeitsdampf stattfindet. Besonders vorteilhaft ist es, das zu komprimierende Gas sowohl vor- als auch nachzuverdichten, wobei infolge des geringeren Verdichtungsverhältnisses jeder einzelnen Verdichtungsstufe der Gesamtwirkungsgrad weiter verbessert wird. Der Gesamtwirkungsgrad wird darüber hinaus noch weiter erhöht durch Einbau je eines Wärmetauschers als Zwischenkühler zwischen die einzelnen Verdichtungsstufen, weil durch die Temperaturabsenkung des komprimierten Gases der Energiebedarf der Verdichteranlage gesenkt wird. Als Zwischenkühler eignen sich Wärmetauscher jeglicher Art, die zur Kühlung eines Gases, insbesondere für Luft, geeignet sind. Als Kühlmedium kommt die Umgebungsluft in Betracht sowie auch alle anderen zur Kühlung geeigneten Medien im offenen wie auch im geschlossenen System.

Die Erhöhung des Gesamtwirkungsgrades und die Aufteilung der Gesamtverdichtung in eine Vor- und Nachverdichtung kann in der Weise vorteilhaft genutzt werden, daß statt eines ölüberfluteten Schrauben- oder Flügelzellenverdichters eine trockenlaufende Maschine eingesetzt wird. Bei hohen Anforderungen an die Erzeugung von ölfreier Druckluft muß für die Abscheidung des Öles aus der Druckluft ein hoher apparativer Aufwand getrieben werden und selbst dann bleibt immer noch ein Restgehalt übrig, der zwar im ppm-Bereich liegt aber für verschiedene Prozesse trotzdem störend sein kann. Aus diesem Grunde werden für diese Anwendungsfälle vorzugsweise trockenlaufende Maschinen eingesetzt, die aber den Nachteil haben, daß durch die Begrenzung der zulässigen Endtemperatur das zu erreichende einstufige Verdichtungsverhältnis als nicht ausreichend angesehen wird.

Das vorgeschlagene Verfahren kann für alle Verdichterbauarten, insbesondere für trockenlaufende Maschinen in vorteilhafter Weise genutzt werden, da durch die Vor- und Nachverdichtung das Verdichtungsverhältnis für das Hauptverdichtungsaggregat geringer gewählt werden kann. Dies bedeutet, daß man je nach gefordertem Verdichtungsverhältnis bzw. Betriebsenddruck das Hauptverdichtungsaggregat mit weniger Verdichtungsstufen ausrüsten kann und damit eine kostengünstigere Herstellung erreicht.

Nachstehend wird die Erfindung anhand von Ausführungsbeispielen näher erläutert. Die dazu erforderlichen Figuren zeigen
- Figur 1: eine Prinzipdarstellung des erfindungsgemäßen Verfahrens,
- Figur 2: eine Verdichteranlage mit einem dem Verdichter vorgeordneten Dampfturbolader,
- Figur 3: eine Verdichteranlage wie Figur 2, jedoch mit einem eingefügten Zwischenkühler,
- Figur 4: eine Verdichteranlage mit einem dem Verdichter nachgeordneten Dampfturbolader,
- Figur 5: eine Verdichteranlage wie Figur 4, jedoch mit einem eingefügten Zwischenkühler,
- Figur 6: eine Verdichteranlage mit einem dem Verdichter vorgeordneten und einem dem Verdichter nachgeordneten Dampfturbolader,
- Figur 7: eine Verdichteranlage wie Figur 6, jedoch mit einem geteilten Dampfstrom,
- Figur 8: eine Verdichteranlage wie Figur 6, jedoch mit einem eingefügten Zwischenüberhitzer und zwei eingefügten Zwischenkühlern,
- Figur 9: eine Verdichteranlage wie Figur 8, jedoch mit einem zusätzlich eingefügten Wärmetauscher,
- Figur 10: eine Verdichteranlage mit einem Abgasturbolader als Vorverdichter und einem Dampfturbolader als Nachverdichter und zwei eingefügten Zwischenkühlern.

Die in den Figuren schematisch dargestellten Funktionspläne umfassen lediglich einige Hauptbaugruppen einer Verdichteranlage sowie die in bezug auf die Erfindung notwendigen Bauteile. Alle anderen zum Betrieb eines Kompressors notwendigen Bauteile und Baugruppen bleiben von der Erfindung unberührt und können je nach Bedarf eingefügt werden, ohne das Wesen der Erfindung zu beeinflussen.

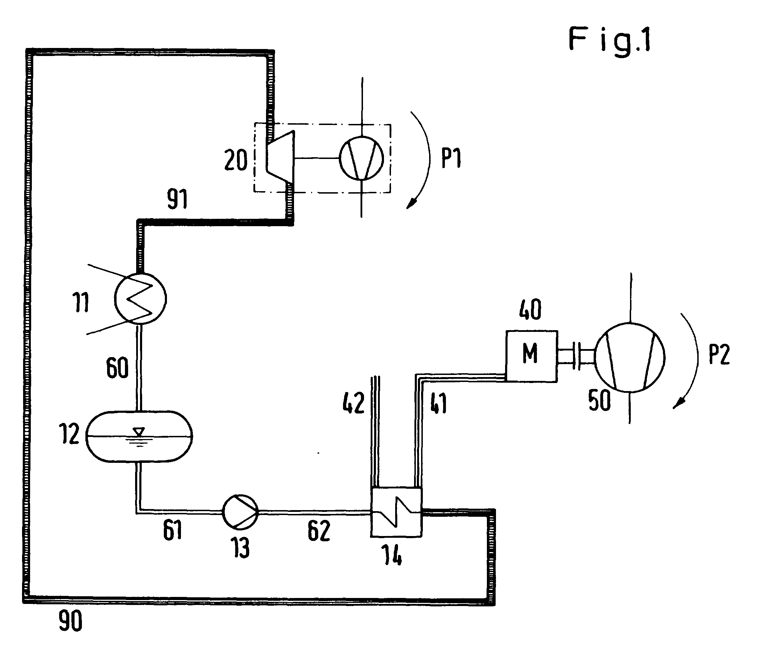

Gemäß Figur 1 ist an eine für sich bekannte Wärmekraftmaschine 40 nutzseitig ein Verdichter 50 angeschlossen. Dieser Verdichter 50 erzeugt eine Druckdifferenz P2 zwischen seinem Eingang und seinem Ausgang. Erfindungsgemäß ist die Abgasseite der Wärmekraftmaschine 40 über eine Abgasleitung 41 mit einem Verdampfer 14 verbunden. In den Verdampfer 14 wird mit Hilfe einer Speisewasserpumpe 13 und einer Verbindungsleitung 62 eine Flüssigkeit, vorzugsweise Wasser, in den Verdampfer gedrückt. Die im Verdampfer 14 durch die Abgasenergie verdampfte Flüssigkeit strömt in Form von Dampf durch die Dampfleitung 90 zur Turbinenseite des Dampfturboladers 20. Dort entspannt sich der Dampf und strömt über die Dampfleitung 91 in einen Kondensator 11 und wird dort kondensiert. Über die Verbindungsleitung 60 gelangt die im Kondensator verflüssigte Flüssigkeit in den Vorratsbehälter 12. Über eine weitere Verbindungsleitung 61 gelangt die Flüssigkeit wieder zur Speisewasserpumpe 13. Der Verdichterteil des Dampfturboladers 20 erzeugt eine Druckdifferenz P1. Damit ist gewährleistet, daß sowohl die nutzseitige Energie der Wärmekraftmaschine 40 mit Hilfe des Verdichters 50 als auch die Abgasenergie der Wärmekraftmaschine 40 mit Hilfe des Dampfturboladers 20 in die Zielgröße Druckdifferenz bzw. Verdichtungsverhältnis umgewandelt wird. Durch Reihenschaltung der Verdichterstufen ist die Gesamtdruckdifferenz der Verdichteranlage somit die Summe aller Druckdifferenzen, in diesem Fall P1 + P2. Dabei ist die Reihenfolge der Verdichterstufen im Prinzip unerheblich.

Zur Erzeugung einer vorgegebenen Druckdifferenz ist bei gegebener Verdichteranordnung eine bestimmbare Energie nötig, die als konstante Größe der gegebenen Wärmekraftmaschine 40 entnommen werden kann. Bei gleicher Menge umgesetzter Energie in der Wärmekraftmaschine 40 ist nunmehr wegen des größeren Verdichtungsverhältnisses der Gesamtwirkungsgrad der Verdichteranlage größer und die anfallende Abwärme innerprozessual nutzbringend verbraucht.

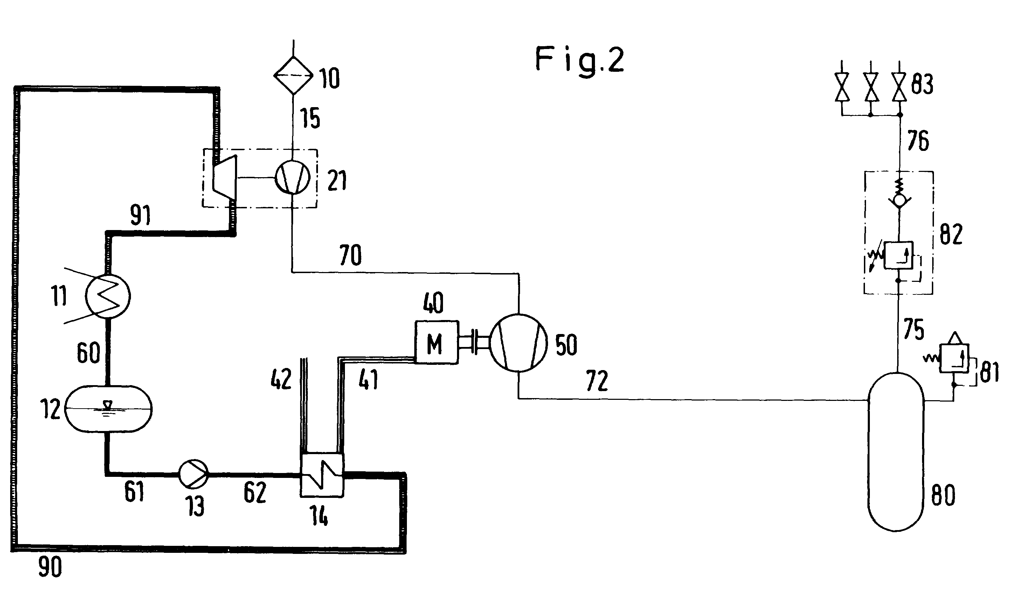

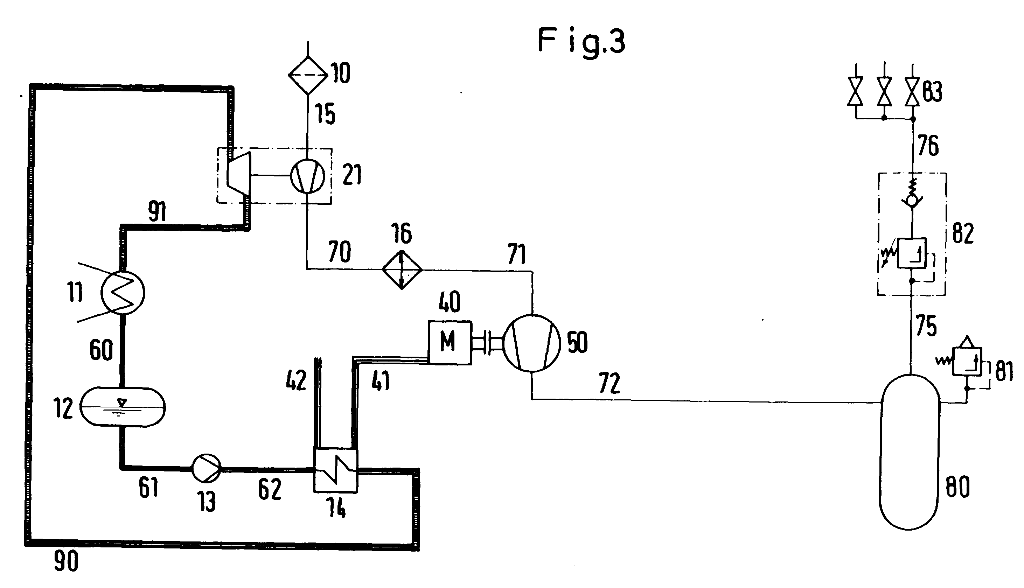

Gemäß Figur 2 wird das zu verdichtende Gas über den Filter 10 gereinigt und durch die Ansaugleitung 15 von dem Dampfturbolader 21 angesaugt. Das vorverdichtete Gas wird dann durch die Druckleitung 70 dem Verdichter 50 zugeführt. Als Antrieb des Verdichters 50 dient die Wärmekraftmaschine 40. Das Abgas der Wärmekraftmaschine 40 wird durch die Abgasleitung 41 dem Verdampfer 14 zugeführt und dann über die Abgasleitung 42 vom Verdampfer 14 aus abgeführt. In dem Verdampfer 14 wird mit Hilfe einer Speisewasserpumpe 13 und einer Verbindungsleitung 62 beispielsweise Wasser in den Verdampfer gedrückt. Das im Verdampfer 14 durch die Abgasenergie verdampfte Wasser strömt in Form von Wasserdampf durch die Dampfleitung 90 zur Turbinenseite des Dampfturboladers 21. Dort entspannt sich der Wasserdampf und strömt über die Dampfleitung 91 in einen Kondensator 11 und wird dort kondensiert. Über die Verbindungsleitung 60 gelangt das im Kondensator verflüssigte Wasser in den Vorratsbehälter 12. Über eine weitere Verbindungsleitung 61 gelangt das Wasser wieder zur Speisewasserpumpe 13. Das verdichtete Gas aus dem Verdichter 50 gelangt über die Druckleitung 72 zu dem Druckbehälter 80. Der Druckbehälter 80 wird durch das Sicherheitsventil 81 überwacht. Aus dem Druckbehälter 80 gelangt das verdichtete Gas durch die Druckleitung 75 über das Druckhalte-Rückschlagventil 82 und durch die Druckleitung 76 zu den Entnahmehähnen 83. Ergänzend dazu ist in Figur 3 der Zwischenkühler 16 zwischen dem Dampfturbolader 21 und dem Verdichter 50 vorgesehen. Dieser Zwischenkühler 16 kühlt das vorverdichtete Gas und senkt den Leistungsbedarf der Verdichteranlage. Zur Verbindung des Zwischenkühlers 16 mit dem Verdichter 50 ist die Druckleitung 71 vorgesehen.

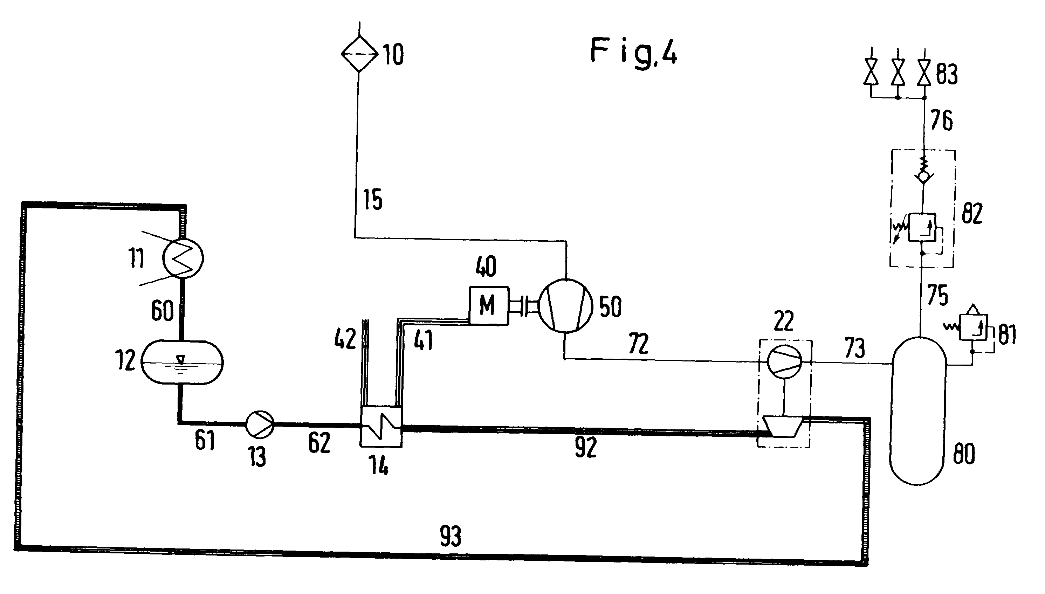

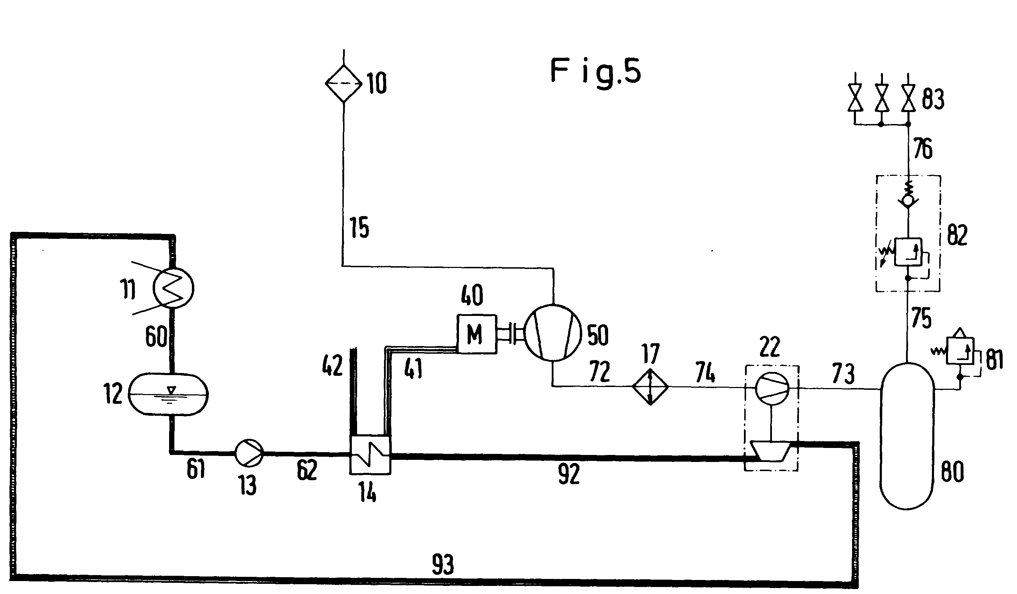

In Ausgestaltung der Erfindung ist gemäß Figur 4 der Dampfturbolader 22 hinter dem Verdichter 50 angeordnet, um das aus dem Verdichter 50 ausströmende Gas nachzuverdichten. Als Antrieb des Verdichters 50 dient die Wärmekraftmaschine 40. Das Abgas der Wärmekraftmaschine 40 wird durch die Abgasleitung 41 dem Verdampfer 14 zugeführt und dann über die Abgasleitung 42 vom Verdampfer 14 aus abgeführt. Das im Verdampfer 14 durch die Abgasenergie verdampfte Wasser strömt in Form von Wasserdampf durch die Dampfleitung 92 zur Turbinenseite des Dampfturboladers 22. Dort entspannt sich der Wasserdampf und strömt über die Dampfleitung 93 in einen Kondensator 11 und wird dort kondensiert. Zur Verbindung des Dampfturboladers 22 mit dem Druckbehälter 80 ist die Druckleitung 73 vorgesehen. Ergänzend dazu ist in Figur 5 der Zwischenkühler 17 hinter dem Verdichter 50 vorgesehen, um analog zur Anordnung gemäß Figur 3 den Leistungsbedarf der Verdichteranlage zu senken. Zur Verbindung des Zwischenkühlers 17 mit dem Dampfturbolader 22 ist die Druckleitung 74 vorgesehen.

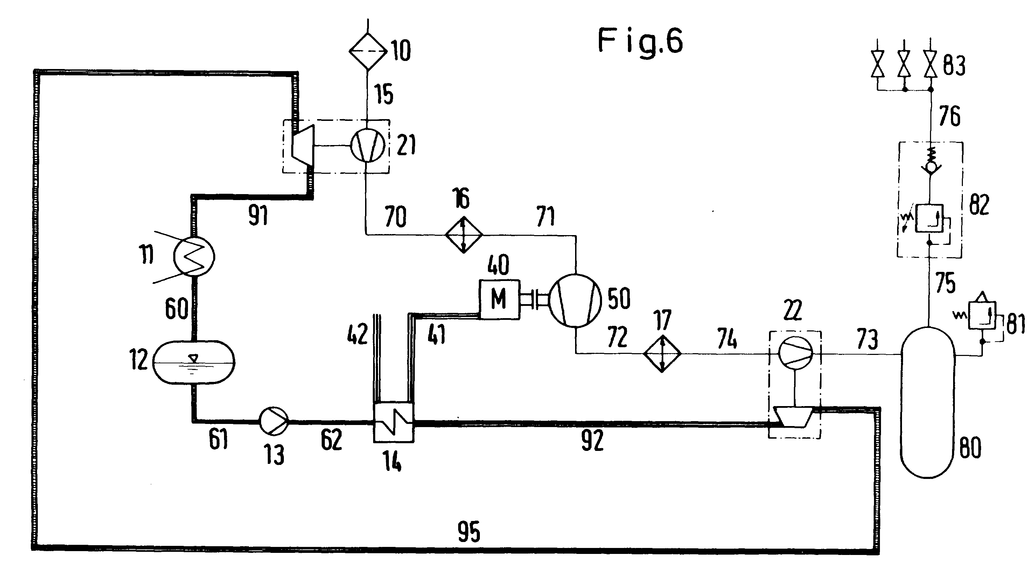

In weiterer Ausgestaltung der Erfindung ist gemäß Figur 6 eine Verdichteranlage dargestellt, bei der sowohl vor als auch hinter dem Verdichter 50 je ein Dampfturbolader 21 und 22 vorgesehen sind. In dem hier dargestellten Beispiel wird über die Dampfleitung 92 zuerst die Turbinenseite des nachverdichtenden Dampfturboladers 22 beaufschlagt und anschließend über die Dampfleitung 95 die Turbinenseite des vorverdichtenden Dampfturboladers 21. Es ist leicht einzusehen, daß die Reihenfolge auch umgekehrt sein kann, d.h. daß die Dampfleitung 92 zuerst mit der Turbinenseite des vorverdichtenden Dampfturboladers 21 verbunden ist. Ergänzend dazu ist dargestellt, daß zusätzlich hinter dem ersten Dampfturbolader 21 ein Zwischenkühler 16 und zusätzlich hinter dem Verdichter 50 ein Zwischenkühler 17 angeordnet ist, um die gesamte Leistungsaufnahme des Verdichters nochmals zu verringern. Jeder vorgesehene Zwischenkühler 16 und 17 kann wahlweise mit einem Kondensatablaß versehen sein.

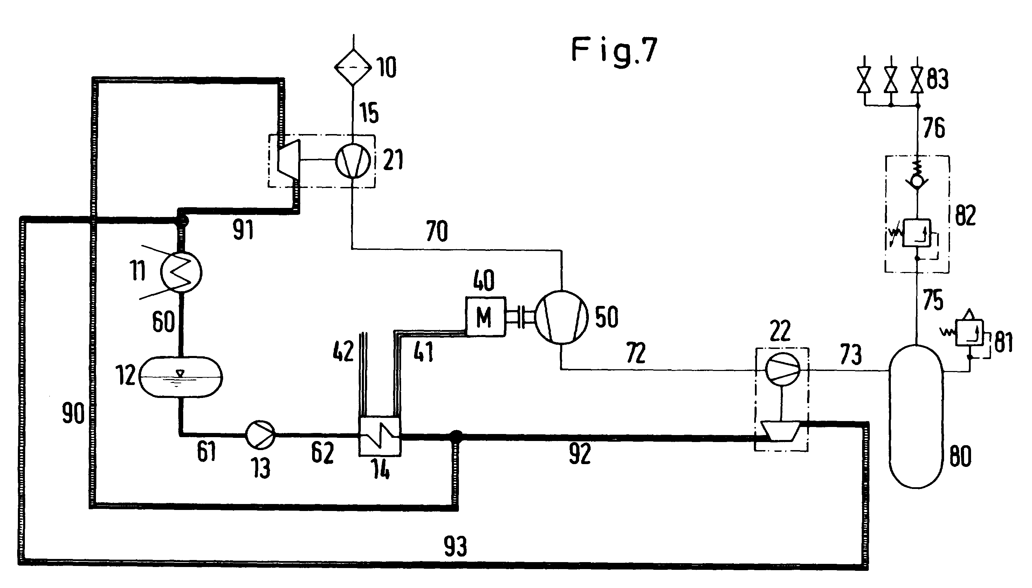

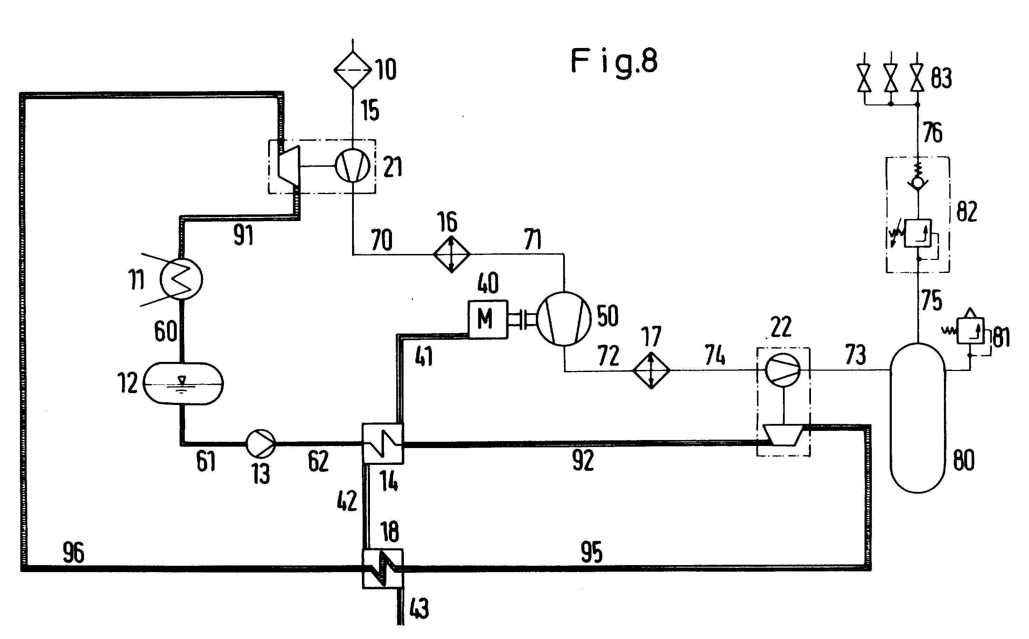

Figur 7 zeigt eine ähnliche Anordnung wie Figur 6, nur mit dem Unterschied, daß der Dampfstrom nach dem Verdampfer 14 geteilt wird. Dadurch entsteht eine Parallelschaltung für den vorverdichtenden Dampfturbolader 21 zum nachverdichtenden Dampfturbolader 22. Vor Eintritt in den Kondensator 11 vereinigen sich die beiden abführenden Dampfleitungen 93, 91 wieder. Die Idee der Teilung des Dampfstromes kann man aber auch für die Regelung verwenden, indem man beispielsweise die Dampfleitung 90 als zu- und abschaltbare Bypassleitung verwendet. Sie würde in diesem Fall dann nicht mit der Turbinenseite des vorverdichtenden Dampfturboladers 22 verbunden werden, sondern vor dem Kondensator 11 münden. Dies hätte den Vorteil, daß man die Dampfzufuhr zu den beiden Dampfturboladern 21, 22 je nach Anforderung, z.B. bei Teillast regeln kann. Ergänzend zu Figur 6 ist in Figur 8 zusätzlich ein Zwischenerhitzer 18 zwischen die beiden Dampfturbolader 21 und 22 gesetzt. Dem Zwischenerhitzer 18 wird durch die Abgasleitung 42 das im Verdampfer 14 teilweise abgekühlte Abgas der Wärmekraftmaschine 40 zugeführt und weiter abgekühlt. Das Abgas wird danach über die Abgasleitung 43 abgeführt. Der zwischenerhitzte Dampf wird über die Dampfleitung 96 dem Dampfturbolader 21 zugeführt. Der Vorteil dieser Ausgestaltung besteht darin, daß dem Dampfturbolader 21 ein Dampf mit höherer Temperatur zugeführt wird, welcher einen höheren nutzbaren Energieinhalt besitzt und damit zu einer Leistungssteigerung im Dampfturbolader 21 führt.

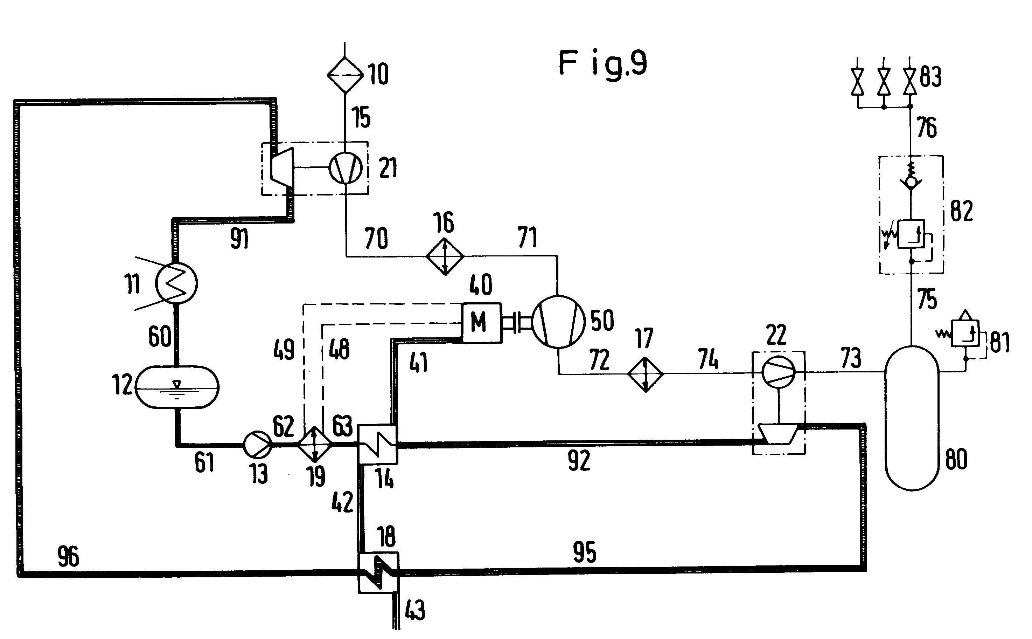

In weiterer Ausgestaltung der Erfindung wird gemäß der Darstellung in Figur 9 neben der Abgaswärme auch noch die Abwärme des Öl- und/oder Kühlkreislaufes der Wärmekraftmaschine 40 genutzt. Andeutungsweise wird dazu über die gestrichelt gezeichnete Leitung 48 erhitztes Öl oder Kühlwasser von der Wärmekraftmaschine 40 einem Wärmetauscher 19 zugeführt, der zwischen der Speisewasserpumpe 13 und dem Verdampfer 14 angeordnet ist. Nach dem Durchlauf durch den Wärmetauscher 19 wird das abgekühlte Öl bzw. Wasser über die ebenfalls gestrichelt gezeichnete Leitung 49 wieder zur Wärmekraftmaschine 40 rückgeführt. Diese Anordnung hat den Vorteil, daß sowohl der Ölkühler als auch der Kühler für das Kühlwasser baulich klein ausgelegt werden können, da ein Teil der gespeicherten Wärme vom Wärmetauscher 19 abgeführt wird. Gleichzeitig führt die Wärmezufuhr zu einer Vorwärmung des auf Druck gespannten Wassers und damit zu einer thermischen Verbesserung des Kreislaufes.

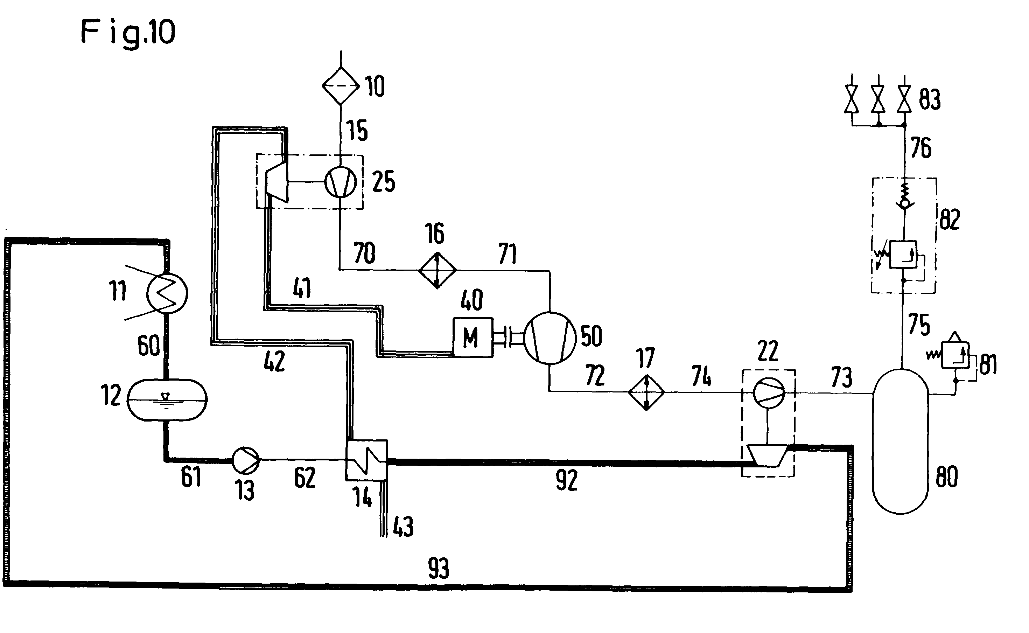

Figur 10 zeigt eine weitere Ausgestaltung der Erfindung, bei der die an sich schon bekannte Nutzung eines Abgasturboladers mit einem erfindungsgemäßen Dampfturbolader kombiniert werden. Dazu wird zuerst über die Abgasleitung 41 die Turbinenseite des Abgasturboladers 25 beaufschlagt und anschließend über die abführende Leitung 42 der Verdampfer 14 des geschlossenen Flüssigkeits-Dampf-Kreislaufsystems. Möglich ist auch eine Umkehrung der Reihenfolge, d.h., daß zuerst der Verdampfer 14 und anschließend die Turbinenseite des Abgasturboladers 25 beaufschlagt werden. Dabei ist es unerheblich, ob der Abgasturbolader 25 als vor- oder als nachverdichtendes Aggregat angeordnet wird. Beide Anordnungen haben den Vorteil, daß vom Abgasstrom sowohl die gespeicherte kinetische als auch die thermische Energie weitgehend genutzt werden.

## Patentansprüche

1. Verfahren zum Verdichten von Luft insbesondere mit mobilen Verdichteranlagen, bei dem mittels eines durch die Nutzseite einer Wärmekraftmaschine (40) angetriebenen Verdichters (50) angesaugte Luft von einem niedrigen Ausgangsdruck, insbesondere Atmosphärendruck auf einen vorgegebenen Enddruck verdichtet und die Energie des Abgasstromes der Wärmekraftmaschine (40) für den Prozeß genutzt wird,
wobei mittels eines Turboladers (21, 22) die angesaugte Luft vor Eintritt in den Verdichter (50) vorverdichtet und/oder die verdichtete Luft nach Austritt aus dem Verdichter (50) nachverdichtet wird und durch unmittelbaren Wärmetausch (14) mit dem Abgasstrom der Wärmekraftmaschine (40) eine unter Druck stehende Flüssigkeit eines geschlossenen Flüssigkeits-Dampf-Kreislaufes verdampft und der Dampf der Antriebsseite des Turboladers (21, 22) zugeführt wird und danach der Abgasstrom in die Umgebung entweicht.

2. Verfahren nach Anspruch 1,
**dadurch gekennzeichnet,**
daß der Dampfstrom geteilt und je ein Teilstrom der Antriebsseite mehrerer Turbolader zugeführt wird.

3. Verfahren nach Anspruch 2,
**dadurch gekennzeichnet,**
daß ein Teilstrom als Bypass zu- oder abgeschaltet wird.

4. Verfahren nach Anspruch 1,
**dadurch gekennzeichnet,**
daß der Dampfstrom nacheinander der Antriebsseite mehrerer Turbolader zugeführt wird.

5. Verfahren nach Anspruch 4,
**dadurch gekennzeichnet,**
daß der Dampfstrom nach Verlassen der Antriebsseite des jeweilig davorliegenden Turboladers und vor Eintritt in die Antriebsseite des jeweilig nachfolgenden Turboladers durch den Abgasstrom der Wärmekraftmaschine erneut erwärmt wird, wobei der Abgasstrom zuerst für die Verdampfung und anschließend für die Zwischenerwärmung oder in umgekehrter Reihenfolge genutzt wird.

6. Verfahren nach Anspruch 4,
**dadurch gekennzeichnet,**
daß der Abgasstrom vor der Einwirkung auf das Flüssigkeit-Dampf-Kreislaufsystem geteilt und ein Teilstrom für die Verdampfung und ein Teilstrom für die Zwischenerwärmung genutzt wird.

7. Verfahren nach einem der Ansprüch 1 bis 6,
**dadurch gekennzeichnet,**
daß zuerst die Antriebsseite eines Abgasturboladers direkt mit dem Abgasstrom der Wärmekraftmaschine beaufschlagt wird und danach die Erwärmung der Flüssigkeit im Flüssigkeits-Dampf-Kreislaufsystem durch den den Abgasturbolader verlassenden Abgasstrom erfolgt.

8. Verfahren nach einem der Ansprüche 1 bis 6,
**dadurch gekennzeichnet,**
daß der Abgasstrom zuerst für die Verdampfung der Flüssigkeit des Flüssigkeits-Dampf-Kreislaufsystems genutzt und anschließend die Antriebsseite eines Abgasturboladers direkt mit dem Abgasstrom beaufschlagt wird.

9. Verfahren nach einem der Ansprüche 1 bis 8,
**dadurch gekennzeichnet,**
daß mit der Abwärme des Schmieröles und/oder des Kühlwassers der Wärmekraftmaschine die zu verdampfende Flüssigkeit des Flüssigkeits-Dampf-Kreislaufsystems vorerwärmt wird.

10. Vorrichtung zur Durchführung des Verfahrens nach Anspruch 1 mit einem Verdichter (50), der über eine Welle mit der Nutzseite einer Wärmekraftmaschine (40) und über eine Leitung (72, 73, 74) mit den Verbrauchsstellen (83) verbunden ist,
wobei mindestens ein Turbolader (21, 22) in der Saug (15, 70, 71) - und/oder Druckleitung (72, 73, 74) des Verdichters (50) angeordnet und antriebsseitig mit der Wärmeenergie des Abgasstromes der Wärmekraftmaschine (40) gekoppelt ist und wobei der Turbolader als Dampfturbolader (21, 22) ausgebildet und die Antriebsseite des Turboladers (21, 22) in einem geschlossenen einen Kondensator (11), einen Vorratsbehälter (12) und eine Speisepumpe (13) aufweisenden Flüssigkeits-Dampf-Kreislauf angeordnet ist und ein Verdampfer (14) in Form eines Wärmetauschers im Leitungssystem (60, 90, 92) des Flüssigkeits-Dampf-Kreislaufes und im Leitungssystem (41, 42) des Abgasstromes der Wärmekraftmaschine (40) angeordnet ist.

11. Vorrichtung nach Anspruch 10,
**dadurch gekennzeichnet,**
daß nach dem Verdampfer (14) die dampfführende Leitung sich verzweigt (90, 92) und die Zweigleitung (90, 92) mit der Antriebsseite des jeweiligen Dampfturboladers (21, 22) verbunden sind und vor dem Kondensator (11) sich die vom jeweiligen Dampfturbolader (21, 22) abführenden Dampfleitungen (91, 93) wieder vereinigen.

12. Vorrichtung nach Anspruch 11,
**dadurch gekennzeichnet,**
daß eine Zweigleitung als ein zu- und abschaltbarer Bypass ausgebildet ist.

13. Vorrichtung nach Anspruch 10,
**dadurch gekennzeichnet,**
daß die dampfführende Leitung (92, 95) nacheinander die in Reihe geschalteten Antriebsseiten der Dampfturbolader (21, 22) miteinander verbindet.

14. Vorrichtung nach Anspruch 13,
**dadurch gekennzeichnet,**
daß in der den jeweilig davorliegenden Dampfturbolader (22) mit dem jeweilig nachfolgenden Dampfturbolader (21) verbindenden Leitung (95) ein Wärmetauscher (18) angeordnet ist, der ebenfalls mit dem Abgasstrom der Wärmekraftmaschine (40) beaufschlagt ist, wobei die Abgasleitung (41) zuerst mit dem Verdampfer (14) und anschließend die wegführende Abgasleitung (42) mit dem Wärmetauscher (18) oder in umgekehrter Reihenfolge verbunden ist.

15. Vorrichtung nach einem der Ansprüche 10 bis 14,
**dadurch gekennzeichnet,**
daß die Antriebsseite eines in der Saug- oder Druckleitung des Verdichters (50) angeordneten Abgasturboladers (25) direkt mit der Abgasleitung (41) der Wärmekraftmaschine (40) und die vom Abgasturbolader (25) abführende Abgasleitung (42) mit dem Verdampfer (14) eines geschlossenen oder offenen Flüssigkeits-Dampf-Kreislaufsyszems, in dem die Antriebsseite mindestens eines Dampfturboladers (22) angeordnet ist, verbunden ist.

16. Vorrichtung nach einem der Ansprüche 10 bis 14,
**dadurch gekennzeichnet,**
daß die Abgasleitung (41) der Wärmekraftmaschine (40) direkt mit dem Verdampfer (14) eines Flüssigkeit-Dampf-Kreislaufsystems und die vom Verdampfer (14) abführende Abgasleitung (42) mit der Antriebsseite eines Abgasturboladers (25) verbunden ist.

17. Vorrichtung nach einem der Ansprüche 10 bis 16,
**dadurch gekennzeichnet,**
daß der Ölkreislauf und/oder Kühlkreislauf der Wärmekraftmaschine (40) über eine Leitung (48, 49) mit einem zwischen Speisepumpe (13) und Verdampfer (14) des Flüssigkeit-Dampf-Kreislaufsystems angeordneten Wärmetauscher (19) verbunden ist.

## Claims

1. Process for compressing air, in particular with mobile compressor units, in which air sucked in by means of a compressor (50) which is driven by the output side of a thermal power engine (40) is compressed by a low initial pressure, in particular atmospheric pressure, to a preset end pressure, and the energy of the waste-gas flow of the thermal power engine (40) is utilised for the process, and the sucked in air is by means of a turbo charger (21, 22) pre-compressed prior to entry into the compressor (50) and/or, after being discharged from the compressor (50), the compressed air is post-compressed, and a pressurised liquid of a sealed liquid-steam circulation is evaporated with the waste-gas flow of the thermal power engine (40) by means of direct heat exchange (14), and the steam is fed to the drive side of the turbo charger (21, 22), and thereafter the waste-gas flow escapes into the environment.

2. Process according to Claim 1, **characterised in that** the steam flow is split and a respective portion of the flow is fed to the drive side of a plurality of turbo chargers.

3. Process according to Claim 2, **characterised in that** a portion of the flow is added or switched off as bypass.

4. Process according to Claim 1, **characterised in that** the steam flow is sequentially fed to the drive side of a plurality of turbo chargers.

5. Process according to Claim 4, **characterised in that** the steam flow is, after leaving the drive side of a respective turbo charger positioned ahead and prior to entry into the drive side of a respective following turbo charger, reheated by the waste-gas flow of the thermal power engine, and the waste-gas flow is initially used for evaporation and thereafter for intermediate heating, or vice versa.

6. Process according to Claim 4, **characterised in that** the waste-gas flow is split prior to acting on the liquid-steam circulation system, and one portion of the flow is utilised for evaporation and another portion is utilised for intermediate heating.

7. Process according to one of Claims 1 to 6, **characterised in that** initially the drive side of a waste-gas turbo charger is directly loaded with the waste-gas flow of the thermal power engine, and thereafter the liquid in the liquid-steam circulation system is warmed up by the waste-gas flow being discharged from the waste-gas turbo charger.

8. Process according to one of Claims 1 to 6, **characterised in that** the waste-gas flow is initially utilised for evaporation of the liquid of the liquid-steam circulation system, and thereafter the drive side of a waste-gas turbo charger is charged directly with said waste-gas flow.

9. Process according to one of Claims 1 to 8, **characterised in that** the liquid of the liquid-steam circulation system which is to be evaporated is preheated by the waste heat of the lubricating oil and/or the cooling water of the thermal power engine.

10. Apparatus for carrying out the process according to Claim 1, comprising a compressor (50) which is connected via a shaft to the output side of a thermal power engine (40) and via a pipe (72, 73, 74) to the consumption points (83), and at least one turbo charger (21, 22) is arranged in the suction pipe (15, 70, 71) and/or pressure pipe (72, 73, 74) of the compressor (50) and on the drive side coupled to the heat energy of the waste-gas flow of the thermal power engine (40), and the turbo charger is designed to be a steam-turbo charger (21, 22), and the drive side of the turbo charger (21, 22) is arranged in a sealed liquid-steam circulation comprising a condenser (11), a storage tank (12) and a feed pump (13), and an evaporator (14) in the form of a heat exchanger is arranged in the pipe system (60, 90, 92) of the liquid-steam circulation and in the pipe system (41, 42) of the waste-gas flow of the thermal power engine (40).

11. Device according to Claim 10, **characterised in that** behind the evaporator (14) the steam-ducting pipe branches (90, 92), and the branch pipes (90, 92) are connected to the drive side of a respective steam-turbo charger (21, 22), and the various steam pipes (91, 93) leading off a respective steam-turbo charger (21, 22) are re-united in front of the condenser (11).

12. Device according to Claim 11, **characterised in that** a branch pipe is designed to be a bypass which can be switched in or out.

13. Device according to Claim 10, **characterised in that** the steam ducting pipe (92, 95) interconnects one after the other series-connected drive sides of the steam-turbo charger (21, 22).

14. Device according to Claim 13, **characterised in that** in the pipe (95), which connects a respective steam-turbo charger (22) in front thereof to a respective steam-turbo charger (21) therebehind, is arranged a heat exchanger (18) which is also charged with waste-gas flow of the thermal power engine (40), and the waste-gas pipe (41) is initially connected to the evaporator (14) and thereafter the removing waste-gas pipe (42) is connected to the heat exchanger (18), or vice versa.

15. Device according to one of Claims 10 to 14, **characterised in that** the drive side of a waste-gas turbo charger (25) arranged in the suction pipe or pressure pipe of the compressor (50) is connected directly to the waste-gas pipe (41) of the thermal power engine (40), and the waste-gas pipe (42) leading away from the waste-gas turbo charger (25) is connected to evaporator (14) of a sealed or open liquid-steam circulation system in which is arranged the drive side of at least one steam-turbo charger (22).

16. Device according to one of Claims 10 to 14, **characterised in that** the waste-gas pipe (41) of the thermal power engine (40) is connected directly to the evaporator (14) of a liquid-steam circulation system, and the waste-gas pipe (42) leading off the evaporator (14) is connected to the drive side of a waste-gas turbo charger (25).

17. Device according to one of Claims 10 to 16, **characterised in that** the oil circulation and/or cooling circulation of the thermal power engine (40) is connected via a pipe (48, 49) to a heat exchanger (19) arranged between the feed pump (13) and the evaporator (14) of the liquid-steam circulation system.

## Revendications

1. Procédé de compression d'air, par des groupes mobiles de compresseurs en particulier, selon lequel de l'air, aspiré au moyen d'un compresseur (50) entraîné par le côté utile d'un moteur thermique (40), est amené à partir d'une faible pression initiale, la pression atmosphérique notamment, à une pression finale prédéfinie, et selon lequel l'énergie du courant de gaz d'échappement du moteur thermique (40) est récupérée pour le processus, l'air induit étant précomprimé, avant son admission dans le compresseur (50), au moyen d'un turbocompresseur (21, 22), et/ou l'air comprimé étant soumis à une post-compression à la sortie du compresseur (50), un liquide sous pression d'un circuit fermé liquide - vapeur étant vaporisé par échange thermique direct (14) avec le courant de gaz d'échappement du moteur thermique (40), et la vapeur étant envoyée au côté entraînement du turbocompresseur (21, 22), puis le courant de gaz d'échappement s'échappant à l'ambiance.

2. Procédé suivant la revendication 1, caractérisé en ce que le courant de vapeur est partagé, et en ce qu'un courant partiel est respectivement envoyé au côté entraînement de plusieurs turbocompresseurs.

3. Procédé suivant la revendication 2, caractérisé en ce qu'un courant partiel est mis en circuit ou hors circuit sous forme de bipasse.

4. Procédé suivant la revendication 1, caractérisé en ce que le courant de vapeur est envoyé successivement au côté entraînement de plusieurs turbocompresseurs.

5. Procédé suivant la revendication 4, caractérisé en ce que le courant de vapeur est de nouveau chauffé par le courant de gaz d'échappement du moteur thermique après sa sortie du côté entraînement du turbocompresseur respectif précédent et avant son admission dans le côté sortie du turbocompresseur respectif suivant, le courant de gaz d'échappement étant d'abord utilisé pour l'évaporation, puis pour le chauffage intermédiaire, ou dans l'ordre inverse.

6. Procédé suivant la revendication 4, caractérisé en ce que le courant de gaz d'échappement est partagé avant d'agir sur le circuit liquide - vapeur, et en ce qu'un courant partiel est utilisé pour l'évaporation et un courant partiel pour le chauffage intermédiaire.

7. Procédé suivant l'une des revendications 1 à 6, caractérisé en ce que le côté entraînement d'un turbocompresseur à gaz d'échappement est d'abord sollicité directement par le courant de gaz d'échappement du moteur thermique, puis le chauffage du liquide dans le circuit liquide - vapeur est assuré par le courant de gaz d'échappement sortant du turbocompresseur.

8. Procédé suivant l'une des revendications 1 à 6, caractérisé en ce que le courant de gaz d'échappement est d'abord utilisé pour l'évaporation du liquide du circuit liquide - vapeur, puis le côté entraînement d'un turbocompresseur à gaz d'échappement est directement sollicité par le courant de gaz d'échappement.

9. Procédé suivant l'une des revendications 1 à 8, caractérisé en ce que le liquide à vaporiser du circuit liquide - vapeur est préchauffé par la chaleur perdue de l'huile lubrifiante et/ou de l'eau de refroidissement du moteur thermique.

10. Dispositif pour la réalisation du procédé suivant la revendication 1, avec un compresseur (50) relié par un arbre au côté utile d'un moteur thermique (40)et par une conduite (72, 73, 74) aux points de consommation (83), un turbocompresseur (21, 22), au moins, étant monté dans la conduite d'aspiration (15, 70, 71) et/ou de refoulement (72, 73, 74) du compresseur (50)et étant couplé, côté entraînement, à l'énergie thermique du courant de gaz d'échappement du moteur thermique (40), le turbocompresseur étant réalisé sous forme de turbocompresseur à vapeur (21, 22), le côté entraînement du turbocompresseur (21, 22) étant disposé dans un circuit fermé liquide - vapeur, doté d'un condenseur (11), d'un réservoir (12) et d'une pompe d'alimentation (13), et un évaporateur (14), en forme d'échangeur thermique, étant monté dans le réseau (60, 90, 92) du circuit liquide - vapeur et dans le réseau (41, 42) du courant de gaz d'échappement du moteur thermique (40).

11. Dispositif suivant la revendication 10, caractérisé en ce que la conduite véhiculant de la vapeur se ramifie (90, 92) en aval de l'évaporateur (14), en ce que la dérivation (90, 92) est reliée au côté entraînement du turbocompresseur à vapeur respectif (21, 22), et en ce que les conduites de vapeur (91, 92), sortant du turbocompresseur à vapeur respectif (21, 22), se réunissent de nouveau en amont du condenseur (11).

12. Dispositif suivant la revendication 11, caractérisé en ce qu'une dérivation est réalisée sous forme de bipasse connectable et déconnectable.

13. Dispositif suivant la revendication 10, caractérisé en ce que la conduite (92, 95) véhiculant de la vapeur relie successivement entre eux les côtés entraînement, montés en série, des turbocompresseurs à vapeur (21, 22).

14. Dispositif suivant la revendication 13, caractérisé en ce qu'un échangeur thermique (18), également sollicité par le courant de gaz d'échappement du moteur thermique (40), est monté dans la conduite (95) reliant le turbocompresseur à vapeur (22) respectivement précédent au turbocompresseur à vapeur (21) respectivement suivant, la conduite d'échappement 41) étant d'abord reliée à l'évaporateur (14), puis la conduite de sortie des gaz d'échappement (42) étant reliée à l'échangeur thermique (18), ou dans l'ordre inverse.

15. Dispositif suivant l'une des revendications 10 à 14, caractérisé en ce que le côté entraînement d'un turbocompresseur à gaz d'échappement (25), monté dans la conduite d'aspiration ou de refoulement du compresseur (50), est directement relié à la conduite d'échappement (41) du moteur thermique (40), la conduite d'échappement (42), sortant du turbocompresseur à gaz d'échappement (25), étant reliée à l'évaporateur (14) d'un circuit fermé ou ouvert liquide - vapeur, dans lequel est disposé le côté entraînement d'un turbocompresseur à vapeur (22), au moins.

16. Dispositif suivant l'une des revendications 10 à 14, caractérisé en ce que la conduite d'échappement (41) du moteur thermique (40) est directement reliée à l'évaporateur (14) d'un circuit liquide - vapeur, la conduite d'échappement (42), sortant de l'évaporateur (14), étant reliée au côté entraînement d'un turbocompresseur à gaz d'échappement (25).

17. Dispositif suivant l'une des revendications 10 à 16, caractérisé en ce que le circuit d'huile et/ou le circuit de refroidissement du moteur thermique (40) est relié par une conduite (48, 49) à un échangeur (19), monté entre la pompe d'alimentation (13) et l'évaporateur (14) du circuit liquide - vapeur.
